# EUROPEAN PATENT APPLICATION

(11) **EP 1 791 347 A1**
(43) Date of publication of application: **30.05.2007**
(21) Application number: 05780153.2
(22) Date of filing: 27.07.2005
(51) Int. Cl.: H04N 5/225

(54) **INFORMATION PROCESSING DEVICE AND METHOD, AND PROGRAM**

(30) Priority: 26.08.2004 JP 2004246248
(71) Applicant: SONY CORPORATION, Tokyo 141-0001 (JP)
(72) Inventor: FUKUTA, Shinya, Shinagawa-ku, Tokyo 1410001 (JP)
(74) Representative: Keston, Susan Elizabeth
(86) International application number: PCT/JP2005/013722
(87) International publication number: WO 2006/022110

(57) **Abstract**

The present invention relates to an information processing apparatus, method and program for controlling highlighting on a screen on the basis of an operation on a touch panel overlaid on a display. A touch-panel operation determining unit 31 detects positional information supplied from a touch panel and generates a control signal corresponding to a user operation on the basis of the detected positional information and an operation screen displayed on a display unit. A remote-control operation determining unit 32 detects an operation signal supplied from a remote control receiving unit and generates a control signal corresponding to the detected operation signal. Each generated control signal is output to each appropriate unit through a bus. A highlight control unit 33 shifts a highlighted position in the operation screen displayed in the display unit in accordance with a user operation using a remote control and cancels the highlighting in accordance with an operation on the touch panel. A counter 34 times non-operation time during which the user does not operate on the touch panel. The present invention can be applied to camcorders.

## Description

### Technical Field

The present invention relates to information processing apparatuses, methods and programs, and in particular, relates to an information processing apparatus, method and program for controlling highlighting a position specified by a user on a screen in accordance with a user operation on a touch panel overlaid on a display or a remote control.

### Background Art

There are electronic apparatuses, e.g., recent camcorders, each having both of a touch panel overlaid on a display and a remote control device (hereinafter, abbreviated to a remote control) as user interfaces for receiving a user operation.

The above-mentioned electronic apparatuses utilize a known technique. According to this technique, when a user selects a key or an image displayed on a display using a remote control, the key selected by the user is highlighted such that the key is emphasized (e.g., the selected key is displayed with higher brightness than that of other keys that are not selected). According to an invention (e.g., see Patent Document 1), when a user operation using a remote control is not performed for a predetermined time after highlighting, the highlighting is canceled.

[Patent Document 1] Japanese Unexamined Patent Application Publication No. 7319340

### Disclosure of Invention

### Problems to be Solved by the Invention

When a user operates a remote control, highlighting on a screen displayed in a display is useful for the user to recognize their operation position. However, when the user operates a touch panel overlaid on the display, it is unnecessary for the user to recognize their operation position. Disadvantageously, highlighting is obtrusive to the user, thus reducing ease of operation.

The present invention is made in consideration of the above disadvantages and is able to control highlighting on a screen on the basis of an operation on a touch panel overlaid on a display.

### Means for Solving the Problems

The present invention provides an information processing apparatus including: first detecting means for detecting an operation using a remote control; second detecting means for detecting an operation on a touch panel; and display control means for executing an indication to indicate a position specified by a user on a screen of a display in accordance with the operation using the remote control detected by the first detecting means and canceling the indication to indicate the position specified by the user on the screen of the display in accordance with the operation on the touch panel detected by the second detecting means.

According to the present invention, the information processing apparatus further includes timer means for timing non-operation time during which an operation using the remote control is not performed. When the non-operation time is continued for a predetermined period, the display control means may cancel the indication to indicate the position specified by the user on the screen of the display.

According to the present invention, the information processing apparatus further includes: imaging means for capturing an image of an object to generate image signals corresponding to the object; and recording and playback means for recording the image signals generated by the imaging means and playing back the signals.

The present invention provides an information processing method including: a first detecting step of detecting an operation using a remote control; a second detecting step of detecting an operation on a touch panel; and a display control step of executing an indication to indicate a position specified by a user on a screen of a display in accordance with the operation using the remote control detected in the first detecting step and canceling the indication to indicate the position specified by the user on the screen of the display in accordance with the operation on the touch panel detected in the second detecting step.

The present invention provides a program allowing a computer to execute a process including: a first detecting step of detecting an operation using a remote control; a second detecting step of detecting an operation on a touch panel; and a display control step of executing an indication to indicate a position specified by a user on a screen of a display in accordance with the operation using the remote control detected in the first detecting step and canceling the indication to indicate the position specified by the user on the screen of the display in accordance with the operation on the touch panel detected in the second detecting step.

According to the information processing apparatus, method and program of the present invention, an indication to indicate a position specified by a user on a screen of a display is performed in accordance with an operation using a remote controller and the indication to indicate the position specified by the user on the screen of the display is canceled in accordance with an operation on a touch panel. Advantages

According to the present invention, highlighting on a screen can be controlled on the basis of an operation on a touch panel overlaid on a display.

### Brief Description of the Drawings

[Fig. 1] Fig. 1 is a block diagram showing an example of the structure of a camcorder to which the present invention is applied.
[Fig. 2] Fig. 2 is a block diagram showing an example of the structure of a control unit in Fig. 1.
[Fig. 3] Fig. 3 is a front view of the appearance of a remote control in Fig. 1.
[Fig. 4] Fig. 4 is a diagram showing an example of an operation screen displayed in a display unit in Fig. 1.
[Fig. 5] Fig. 5 is a flowchart explaining a highlight control process.
[Fig. 6] Fig. 6 is a diagram showing another example of the operation screen displayed in the display unit in Fig. 1.
[Fig. 7] Fig. 7 is a diagram showing another example of the operation screen displayed in the display unit in Fig. 1.
[Fig. 8] Fig. 8 is a diagram showing another example of the operation screen displayed in the display unit in Fig. 1.

### Reference Numerals

1 camcorder, 11 control unit, 12 recording medium, 13 bus, 14 remote control receiving unit, 15 imaging unit, 16 image processing unit, 17 recording unit, 18 display unit, 19 touch panel, 20 remote control, 31 touch-panel operation determining unit, 32 remote-control operation determining unit, 33 highlight control unit, 34 counter, 61 movement keys, 62 ENTER key

### Best Mode for Carrying Out the Invention

A specific embodiment according to the present invention will be described in detail below with reference to the drawings.

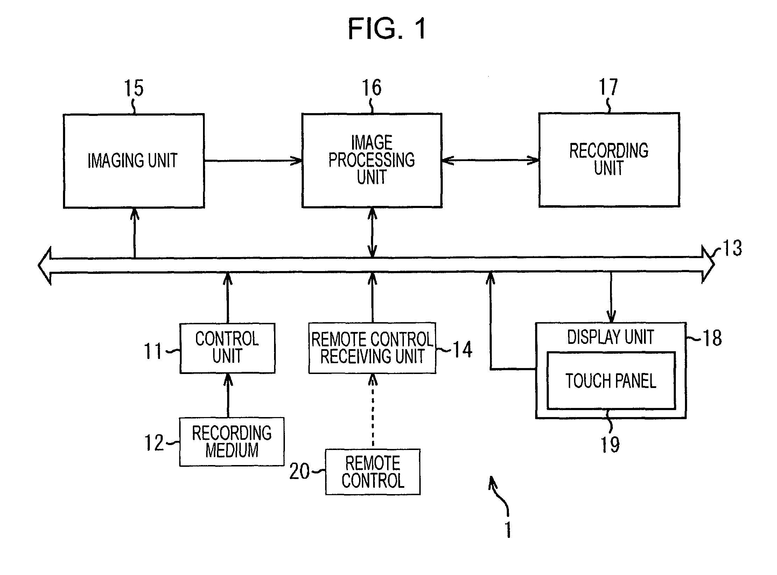

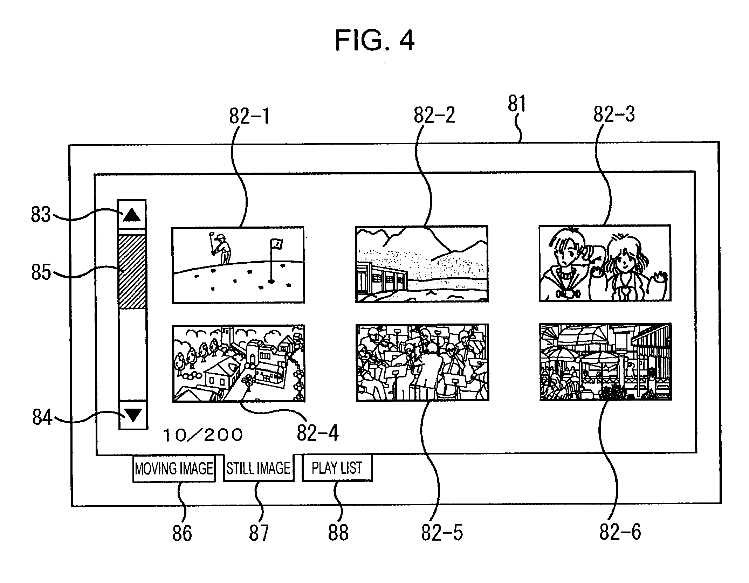

Fig. 1 illustrates an example of the structure of a camcorder according to an embodiment of the present invention. A camcorder 1 captures moving images and/or still images, records the images, and plays back the images. A control unit 11 controls respective units of the camcorder 1 in accordance with a user operation on a touch panel 19 or a remote control 20 on the basis of a control program recorded in a recording medium 12. In addition, the control unit 11 generates image signals corresponding to an operation screen 81 (Fig. 4) to be displayed in a display unit 18 and outputs the signals to the display unit 18 via a bus 13.

A remote control receiving unit 14 receives a signal transmitted from the remote control 20 in response to a user operation and outputs an operation signal corresponding to the received signal to the control unit 11 via the bus 13.

An imaging unit 15 includes a lens, a diaphragm, a shutter, a CCD (Charge Coupled Device), a CDS (Correlated Double Sampling) circuit, an AGC (Auto Gain Control) circuit, and an A/D (Analog Digital) converter which are not shown. The imaging unit 15 converts an optical image of an object into electric image signals and outputs the image signals to an image processing unit 16.

The image processing unit 16 performs predetermined image processing to the image signals supplied from the imaging unit 15 and outputs the resultant signals to the display unit 18 through the bus 13. In addition, the image processing unit 16 compresses and encodes the image signals supplied from the imaging unit 15 and outputs obtained encoded data to a recording unit 17. Further, the image processing unit 16 decompresses encoded data supplied from the recording unit 17 to obtain image signals, and outputs the signals to the display unit 18.

The display unit 18 displays an image corresponding to image signals supplied from the control unit 11 or the image processing unit 16 through the bus 13. The touch panel 19 overlaid on the display unit 18 is transparent such that the screen of the display unit 18 is visible. The touch panel 19 receives a user operation to select any of keys arranged in the operation screen 81 displayed on the display unit 18 and outputs positional information indicative of a position where the user operation has been performed to the control unit 11 through the bus 13.

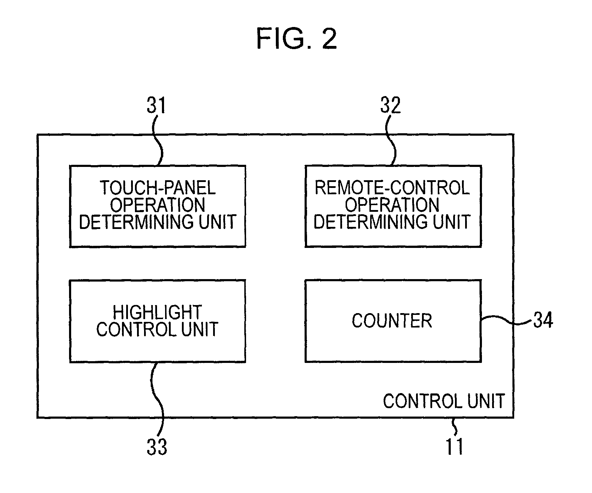

Fig. 2 shows an example of the detailed structure of the control unit 11. A touch-panel operation determining unit 31 detects positional information supplied from the touch panel 19 through the bus 13 and generates a control signal corresponding to a user operation on the basis of the detected positional information and the operation screen displayed in the display unit 18. A remote-control operation determining unit 32 detects an operation signal supplied from the remote control receiving unit 14 through the bus 13 and generates a control signal corresponding to the detected operation signal. The generated control signal is output to each appropriate unit through the bus 13.

A highlight control unit 33 shifts a highlighted position in the operation screen displayed in the display unit 18 in accordance with a user operation using the remote control 20 and cancels highlighting in accordance with an operation on the touch panel 19. A counter 34 times non-operation time during which the user does not operate the remote control 20.

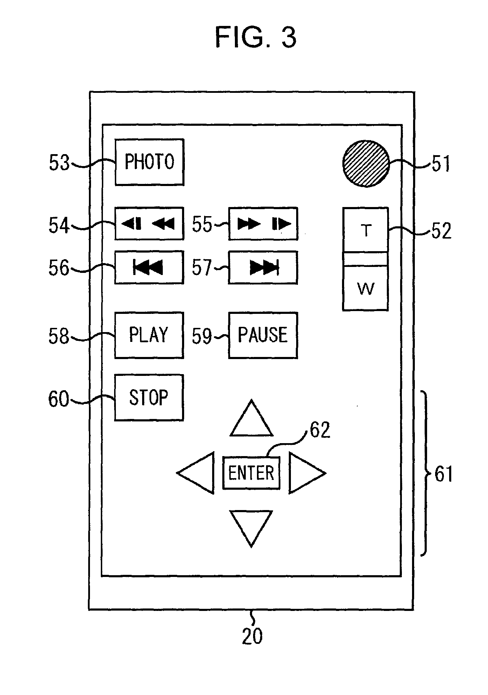

Fig. 3 shows an example of the appearance of the remote control 20. A START/STOP 51 on the remote control 20 is pressed to start or stop shooting in a moving image capture mode or to specify capture timing in a still image capture mode. A ZOOM key 52 is pressed to zoom in or out. A PHOTO key 53 is pressed to switch from the moving image capture mode to the still image capture mode. A BACKWARD-SCAN key 54 is pressed to perform scan or slow playback in the backward direction. A FORWARD-SCAN key 55 is pressed to perform scan or slow playback in the forward direction.

A PREVIOUS key 56 is pressed to find the beginning backward. A NEXT key 57 is pressed to find the beginning forward. A PLAY key 58 is pressed to play selected moving images. A PAUSE key 59 is pressed to temporarily stop the playback of moving images. A STOP key 60 is pressed to stop the playback of moving images. Any of movement keys 61 is pressed to shift a selected position (highlighted position) on the operation screen. An ENTER key 62 is pressed to confirm a selected position determined using the movement keys 61.

Fig. 4 shows an example of an operation screen displayed in the display unit 18. In this operation screen 81, thumbnail display areas 82-1 to 82-6 each display a thumbnail (reduced image) corresponding to encoded data recorded in the recording unit 17.

A scroll-up button 83 is operated to scroll up thumbnails displayed in the thumbnail display areas 82-1 to 82-6. As for an operating method, the user operates the movement keys 61 on the remote control 20 to shift a highlighted position to the scroll-up button 83 and then presses the ENTER key 62. Alternatively, the user may touch the scroll-up button 83 (actually, the touch panel 19) displayed on the display unit 18. Other buttons, which will be described below, may be operated in the same manner.

A scroll-down key 84 is operated to scroll down thumbnails displayed in the thumbnail display areas 82-1 to 82-6. A slide bar 85 is operated to scroll up or down thumbnails displayed in the thumbnail display areas 82-1 to 82-6.

A moving image tab 86 is operated to display thumbnails in the thumbnail display areas 82-1 to 82-6, the thumbnails corresponding to encoded data of moving images recorded in the recording unit 17. A still image tab 87 is operated to display thumbnails in the thumbnail display areas 82-1 to 82-6, the thumbnails corresponding to encoded data of still images recorded in the recording unit 17. A play list tab 88 is operated to display a play list for playing favorite images selected from among moving images or still images, serving as encoded data, recorded in the recording unit 17 in an arbitrary order.

An outline of highlighting on the operation screen 81 displayed in the display unit 18 will now be described. On the operation screen 81, highlighting is used to indicate a position corresponding to a user operation using the remote control 20. In other words, when an operation using any of the movement keys 61 on the remote control 20 is performed, a predetermined position (last operation position or initial position) is highlighted on the operation screen 81. While the operation using the remote control 20 is continued, a position corresponding to the operation is highlighted on the operation screen 81. When the user operates the touch panel, alternatively, when an operation using the remote control 20 is not performed for a predetermined period, highlighting a predetermined position on the operation screen 81 is canceled.

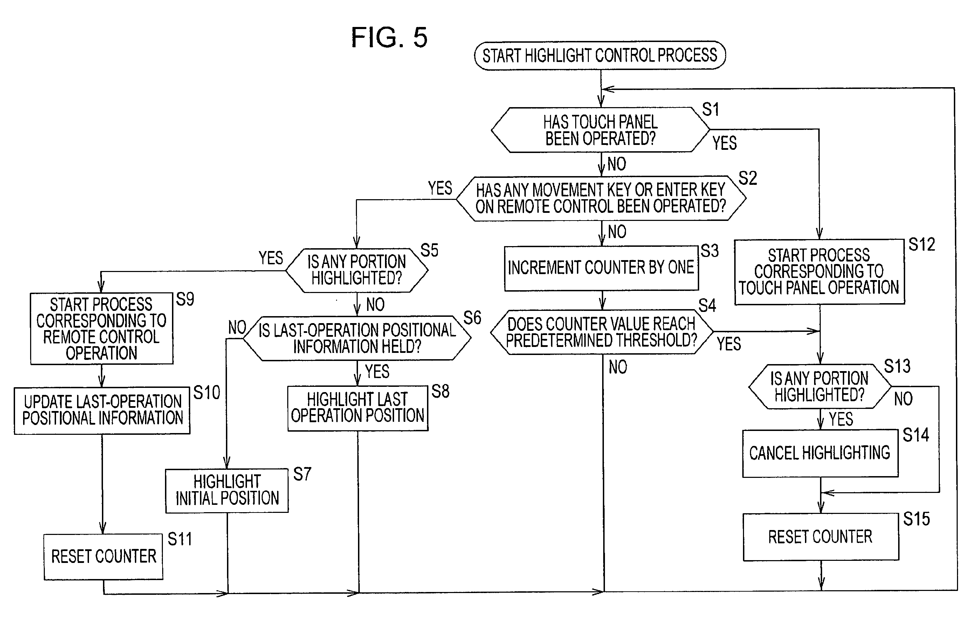

Fig. 5 is a flowchart explaining a process (hereinafter, referred to as a highlight control process) of controlling highlighting as mentioned above. The highlight control process is started when the operation screen 81 is displayed in response to a predetermined operation by the user.

In step S1, the touch-panel operation determining unit 31 determines whether the touch panel 19 has been operated by the user. If NO, the process proceeds to step S2. In step S2, the remote-control operation determining unit 32 determines whether any of the movement keys 61 or the ENTER key 62 on the remote control 20 has been operated by the user. If NO, the process proceeds to step S3. In step S3, the counter 34 increments its value by one. In step S4, the counter 34 determines whether its value reaches a predetermined threshold. If NO, the process is returned to step S1. Step S1 and subsequent steps are repeated.

When it is determined in step S2 that any of the movement keys 61 or the ENTER key 62 on the remote control 20 has been operated by the user, the process proceeds to step S5. In step S5, the highlight control unit 33 determines whether any portion is highlighted on the operation screen 81 displayed at that time. If NO, the process proceeds to step S6. In step S6, the highlight control unit 33 determines whether last-operation positional information (information indicative of a position highlighted in accordance with the preceding operation using the remote control 20) is held. If NO, the process proceeds to step S7. In step S7, the highlight control unit 33 highlights a predetermined initial position on the operation screen 81 displayed at that time. The process is then returned to step S1. Step S1 and subsequent steps are repeated.

When it is determined in step S6 that the highlight control unit 33 holds the last-operation positional information, the process proceeds to step S8. In step S8, the highlight control unit 33 highlights a position, specified by the last-operation positional information, on the operation screen 81. The process is then returned to step S1. Step S1 and subsequent steps are repeated.

When it is determined in step S5 that any portion is highlighted on the operation screen 81 displayed at that time, the process proceeds to step S9. In step S9, the remote-control operation determining unit 32 generates a control signal corresponding to the operation on the remote control 20 detected in step S2 and outputs the signal to each appropriate unit. Thus, e.g., a highlighted position is shifted, displayed thumbnails are scrolled, or playing back encoded data corresponding to a selected thumbnail is started. In step S10, the highlight control unit 33 updates the held last-operation positional information such that the information indicates a position highlighted at that time. In step S11, the counter 34 resets its value to an initial value. The process is then returned to step S1. Step S1 and subsequent steps are repeated.

If it is determined in step S1 that the touch panel 19 has been operated by the user, the process proceeds to step S12. In step S12, the touch-panel operation determining unit 32, the touch-panel operation determining unit 32 generates a control signal corresponding to the operation on the touch panel 19 detected in step S1 and outputs the signal to each appropriate unit. Thus, thus, for example, the displayed thumbnails are scrolled, or playing back encoded data corresponding to a thumbnail is started.

In step S13, the highlight control unit 33 determines whether any portion is highlighted on the operation screen 81 displayed at that time. If it is determined that any portion is highlighted on the operation screen 81 displayed at that time, the process proceeds to step S14. The highlighting is canceled. If NO in step S13, step S14 is skipped.

In step S15, the counter 34 resets its value to an initial value. The process is returned to step S1. Step S1 and subsequent steps are repeated.

When it is determined in step S4 that the value of the counter 34 reaches the predetermined threshold, the process proceeds to step S13. As mentioned above, if any portion is highlighted, the highlighting is canceled. Therefore, as long as the predetermined threshold of the counter 34 used in step S4 is set to a proper value, if the user does not perform any operation for a predetermined period, highlighting can be canceled. The explanation of the highlight control process is completed.

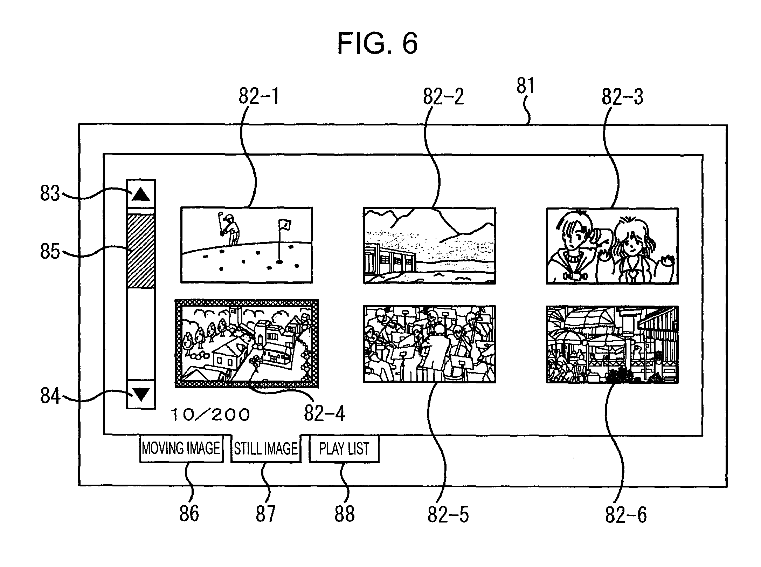

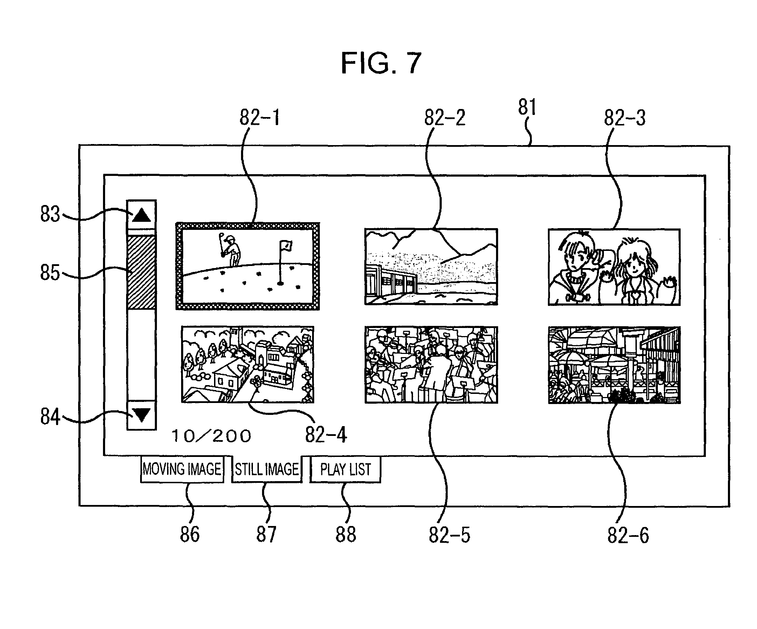

As mentioned above, according to the highlight control process, in a case where any portion is not highlighted on the operation screen 81 as shown in, e.g., Fig. 4, when any of the movement keys 61 or the ENTER key 62 on the remote control 20 is operated, as shown in Fig. 6, the thumbnail display area 82-4 in the last operation position (or the initial position) is highlighted regardless of the operated key (in the diagram, highlighting is shown by hatching). For example, when the upward movement key 61 is further operated, the highlighted position is shifted as shown in Fig. 7, i.e., the thumbnail display area 82-1 is highlighted. After that, if an operation using the remote control 20 is not performed for a predetermined period, highlighting the thumbnail display area 82-1 is canceled. The display state is returned to that in Fig. 4.

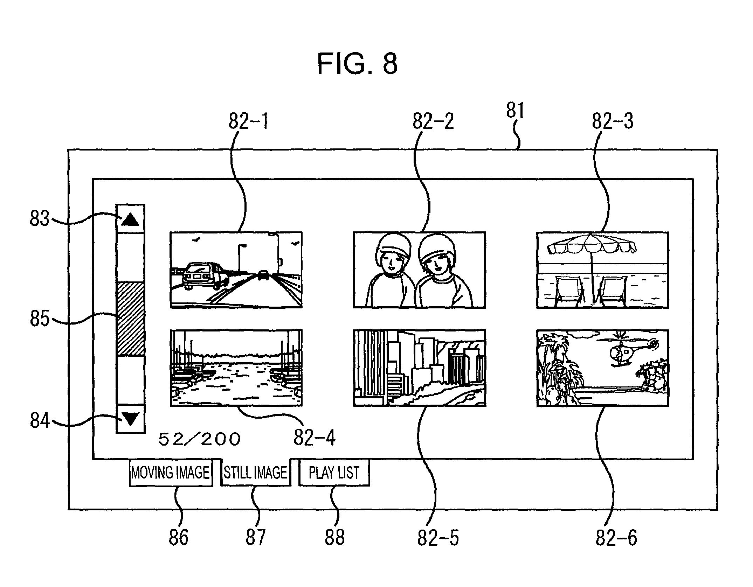

For example, in a case where the thumbnail display area 82-1 is highlighted as shown in Fig. 7, when an operation is performed in a position corresponding to the scroll-down button 84 in the operation screen 81 on the touch panel 19, as shown in Fig. 8, displayed thumbnails are scrolled down and highlighting on the operation screen 81 is canceled.

Therefore, highlighting which is obtrusive to the user who operates the touch panel 19 is eliminated, thus removing complication on the operation screen 81. This leads to improved ease of operation. In the above-mentioned case, the position of the scroll-down button 84 where the operation on the touch panel 19 has been performed is the last operation position. After that, therefore, when any of the movement keys 61 or the ENTER key 62 on the remote control 20 is operated, the scroll-down button 84 is highlighted.

The present invention can be applied not only to camcorders like that according to the present embodiment but also to electronic apparatuses each being operable using the corresponding remote control or touch panel overlaid on a screen by a user.

In the present specification, steps executed on the basis of the program include steps executed in time series in the above-described order and those executed not always time-serially but in parallel or individually.

## Claims

1. An information processing apparatus for performing a process in accordance with an operation on a touch panel overlaid on a display or an operation using a remote control, the apparatus comprising:
first detecting means for detecting an operation using the remote control;
second detecting means for detecting an operation on the touch panel; and
display control means for executing an indication to indicate a position specified by a user on a screen of the display in accordance with the operation using the remote control detected by the first detecting means and canceling the indication to indicate the position specified by the user on the screen of the display in accordance with the operation on the touch panel detected by the second detecting means.

2. The information processing apparatus according to Claim 1, further comprising:
timer means for timing non-operation time during which an operation using the remote control is not performed, wherein
when the non-operation time is continued for a predetermined period, the display control means cancels the indication to indicate the position specified by the user on the screen of the display.

3. The information processing apparatus according to Claim 1, further comprising:
imaging means for capturing an image of an object to generate image signals corresponding to the object; and
recording and playback means for recording the image signals generated by the imaging means and playing back the signals.

4. An information processing method for performing a process in accordance with an operation on a touch panel overlaid on a display or an operation using a remote control, the method comprising:
a first detecting step of detecting an operation using the remote control;
a second detecting step of detecting an operation on the touch panel; and
a display control step of executing an indication to indicate a position specified by a user on a screen of the display in accordance with the operation using the remote control detected in the first detecting step and canceling the indication to indicate the position specified by the user on the screen of the display in accordance with the operation on the touch panel detected in the second detecting step.

5. A program to perform a process in accordance with an operation on a touch panel overlaid on a display or an operation using a remote control, the program allowing a computer to execute the process comprising:
a first detecting step of detecting an operation using the remote control;
a second detecting step of detecting an operation on the touch panel; and
a display control step of executing an indication to indicate a position specified by a user on a screen of the display in accordance with the operation using the remote control detected in the first detecting step and canceling the indication to indicate the position specified by the user on the screen of the display in accordance with the operation on the touch panel detected in the second detecting step.
